# EUROPEAN PATENT SPECIFICATION

(11) **EP 2 836 788 B1**
(45) Date of publication and mention of the grant of the patent: **15.05.2019**
(21) Application number: 13760766.9
(22) Date of filing: 12.03.2013
(51) Int. Cl.: G01B 11/27, G06T 19/00, G06F 3/14, G06F 3/01, G06F 3/0481, G06F 3/0346

(54) **MOBILE DISPLAY UNIT FOR SHOWING GRAPHIC INFORMATION WHICH REPRESENTS AN ARRANGEMENT OF PHYSICAL COMPONENTS**
MOBILE ANZEIGEEINHEIT ZUR ANZEIGE GRAFISCHER INFORMATIONEN ZUR DARSTELLUNG EINER ANORDNUNG PHYSISCHER KOMPONENTEN
MODULE D'AFFICHAGE MOBILE POUR AFFICHER DES DONNÉES GRAPHIQUES QUI REPRÉSENTENT UN AGENCEMENT DE COMPOSANTS PHYSIQUES

(30) Priority: 12.03.2012 SE 1250227
(43) Date of publication of application: 18.02.2015
(73) Proprietor: Acoem AB, 431 21 Mölndal (SE)
(72) Inventor: STRÖMBERG, Peter, S-414 67 Göteborg (SE); LINDE, Petter, S-433 62 Sävedalen (SE)
(74) Representative: Andersson, Per Rune
(86) International application number: PCT/SE2013/050223
(87) International publication number: WO 2013/137807

(56) References cited:
- EP-A2- 2 109 031
- WO-A1-03/089875
- US-A1- 2008 201 097
- US-A1- 2008 201 097
- US-A1- 2009 293 012
- US-A1- 2009 293 012
- US-A1- 2009 303 204
- US-A1- 2010 131 227
- US-A1- 2011 178 707
- US-A1- 2012 038 675

## Description

### TECHNICAL FIELD

The present invention relates to a mobile display unit for displaying graphic information representing an arrangement of physical components, wherein the display unit comprises a control unit adapted for transmitting information regarding at least the position of said arrangement.

### TECHNICAL BACKGROUND

In several fields of technology there is a need for correct alignment of various components and machinery relative to each other. During operation of, for example, large engines, pumps and similar equipment it is necessary that an output shaft of a driving unit, for example in the form of a motor, are aligned correctly with respect to an input shaft of a driven unit, for example in the form of a pump. In this way, the output power of the motor can be transmitted via the rotational movement of the motor shaft to the input shaft of the pump in an optimal way. Any misalignment between the two shafts can result in poor efficiency and an increased risk of wear and damage to the motor and pump.

As a result, there is in the aforementioned technical field a requirement for correct alignment of the output shaft of the motor relative to the input shaft of the pump. In this regard it should be noted that the two shafts can give rise to misalignments of generally two different kinds. More specifically, the shafts may be arranged with a certain angle in relation to each other, which is called angular errors, that is, a "horizontal angular error" and a "vertical angular error". Secondly, the shafts may, even if they are parallel to each other, be somewhat offset relative to each other so that they extend outwards in two separate directions, *i.e.* in parallel. This is called "horizontal offset" and "vertical offset". If these errors exceed pre-determined threshold values, it can be assumed that the shafts, and their associated machines, are poorly aligned relative to each other.

Thus, there is a general need for systems and methods of aligning different machine units comprising rotating shafts. Such systems and methods may be used for motors, pumps, and similar equipment. Generally, they can be used in power plants, chemical industries, and oil refineries, especially in applications involving high speed, or in applications involving expensive process-critical machines, which must be aligned.

In accordance with the prior art, described in, for example, SE 524366, an alignment of two rotatable shafts of two machines can be made by means of measuring apparatus comprising a first measuring unit arranged for mounting on a first machine and comprising a light source for generating light radiation in the direction towards a second measuring unit arranged for mounting on a second machine, and also comprising a second light source for generating light radiation in the direction towards the first measuring unit. Furthermore, each of the measuring units comprises a detection unit for emitted light radiation. By means of this apparatus, the alignment of the two shafts of the machine can be checked.

The alignment of the components or the machines can be manually set by a user; usually a technician. This has led to a demand for systems that can calculate angular errors and offset values and represent these values and the position of the components. In accordance with the prior art, this need has been met partly by connecting a display unit, comprising *i.a.* control unit and display, to the measuring units. In this solution, the control unit receives the values from the measuring units and then calculates the alignment of the components via angular errors and offset values. These values are displayed by the display unit via the display as numerical values and graphic information of the components. Icons and indicators of how the components should be moved and how their position should be adjusted in the alignment can be displayed on the display to the convenience of the user.

It is a drawback of current display units that the graphic information is not clear to the user, and hence not always fully usable. It is also difficult for the user to identify the values which according to the display need to be changed as the graphic information on the display and the arrangement of the physical components are not always consistent.

US2008201097 A1 discloses an alignment system and aligning method that involves receiving a signal from an alignment measurement device in a controller, and displaying a real-time position of an alignment measurement device.

Thus, there is a market need for increased user applicability and a clearer representation of the components on the display of a display unit for the alignment of shaft driven machines.

The present invention is defined by the appended claims. Particular embodiments are set out in the respective dependent claims. Embodiments which do not fall within the scope of the claims do not describe part of the present invention.

### DESCRIPTION OF THE INVENTION

The present invention relates to a mobile display unit for displaying graphic information representing an arrangement of physical components where the display unit comprises a control unit adapted for transmitting information regarding at least the position of said arrangement.

It is an object of the present invention to devise a mobile display unit by means of which improved measuring and aligning of the relative positions of two components can be performed. It is a particular object to devise a mobile display unit with improved user applicability where the graphic information reflects the arrangement of the physical components relative to each other in a clearer and more flexible way than known solutions.

This object is achieved by a mobile display unit comprising a gyro unit for recording the geometric position of the display unit, where said gyro unit is connected to said control unit. The control unit is adapted to adjust said display of said graphic information in dependence on the orientation of the display unit relative to said arrangement. The graphic information of the components and their orientation shown on the display of the display unit facilitates the user's understanding of which physical distance should be adjusted, and how the components should be moved at the alignment in order to avoid angular errors and offset values.

In an advantageous example of the mobile display unit, said graphic information is three-dimensional views of the arrangement of said physical components. A three-dimensional view shown on the display is user friendly because it accurately reflects what a user sees before him during the actual measuring and aligning procedure.

It is an advantage of the mobile display unit according to the present invention that the gyro unit is adapted to receive an initial calibration value for the registration of geometric position and orientation of the display unit from the user via the control unit. From this initial value, the gyro unit can subsequently register when the user moves himself and the display unit. The graphic information displayed on the display unit can thus be changed based on this initial calibration value, which is used as the starting position of the display unit.

The control unit of the mobile display unit comprises a plurality of variants of said graphic information to represent the arrangement of said components in dependence on the orientation of the display unit relative to said arrangement. The position and orientation of the display unit relative to the arrangement is determined by means of the initial calibration and the registration of movement by the gyro unit. The graphic information of the arrangement of said physical components shown by the display unit is changed by the control unit at pre-determined values received from the gyro unit. The effect of this is that the graphic information shown on the display of the display unit changes when the orientation of the display unit changes. When a first user physically hands over the display unit to a second user in a different position, for example on the other side of the arrangement, the graphic information will be changed on the display unit as a result of the display unit being rotated 180 degrees (*i.e.* so that the second user shall be able to hold the display unit such that it is facing in the right direction). Thus, both the first and the second user will be able to see the arrangement from their own individual positions and perspectives.

Furthermore, the invention also discloses a measuring system for measuring the relative positions of a first component and a second component. The measuring system comprises a first measuring unit and a second measuring unit where said first measuring unit comprises a light source; said second measuring unit comprises a detector for said light source; and a display unit according to the present invention.

In a particular embodiment of the measuring system, the first measuring unit is connected to said first physical component, and the second measuring unit is connected to said second physical component.

It is an advantageous property of the display unit of the measuring system that it comprises connection to at least said first measuring unit. The connection allows the display unit to receive the values measured by the measuring units, and thus to calculate angular errors and offset values. These can then be displayed by the display unit and read by the user. Thus, the user checks whether the alignment of the components is correct or needs adjustment.

The physical components include a driving shaft and a receiving shaft to which said measuring units are connected. Preferably, the measuring units are connected to respective shafts of said first and second components so as to be able to measure the positions of the shafts at various operating conditions.

The measuring units in the measuring system measure the relative position of said first component relative to said second component at different operating conditions. The effect of this is that a plurality of values can be measured, which together can be used for determining the alignment. Thus, the alignment can be left to the user.

The control unit of the display unit receives different measuring values and thus calculates alignment errors upon receipt of at least three relative positions from said measuring units. The display unit shows calculated alignment errors, whereby it is accomplished that the user quickly sees whether a component must be realigned. Preferably, the display unit shows, via the graphic information, which distances or angles should be adjusted, and how they should be adjusted. This gives the user a simple overview of the measuring system and the arrangement of the physical components, as well as the alignment thereof.

### BRIEF DESCRIPTION OF THE DRAWINGS

The present invention will now be described in detail with reference to the accompanying drawings, where:
- Figure 1: shows an arrangement of physical components connected to measuring units and the display unit according to the present invention;
- Figure 2: shows a schematic illustration of the display unit;
- Figure 3: shows an arrangement of physical components and the display unit in a co-ordinate system;
- Figures 4a-b: show an arrangement of physical components and the display unit in different user positions;
- Figures 5a-c: show the graphic information of the display unit of the arrangement according to Figure 3 and Figure 4b during measuring, and
- Figures 6a-c: show the graphic information of the display unit of the arrangement according to Figure 4a and Figure 4b during aligning of the components.

### DESCRIPTION OF EXEMPLARY EMBODIMENTS

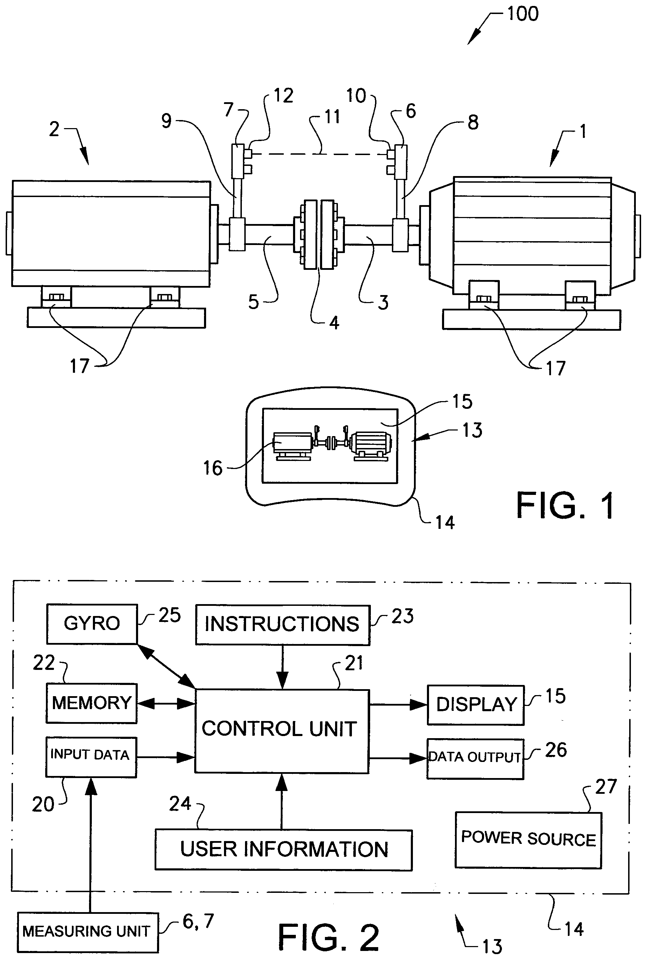

Figure 1 shows an arrangement 100 of a first component 1 and a second component 2, where the first component 1 is a drive unit, such as for example a motor, and the second component 2 is driven by the first component 1 and is, for example, a pump or a generator. The invention is not limited to use with a motor and a pump, but can be used for other types of measurements of relative positions between a first component 1 and a second component 2 at different operating conditions. The measured effect of the first component 1 is transmitted to the second component 2 via an output shaft 3 of the first component 1, a coupling 4, and an input shaft 5 of the second component 2.

The output shaft 3 and the input shaft 5 are each provided with measuring units 6 and 7 for measuring and aligning the output shaft 3 of the motor 1 in relation to the input shaft 5 of the motor 1. In particular, the alignment may be assessed by determining any present angular errors and offset values of the two shafts 3, 5. The measuring units 6, 7 are mounted on the first component 1 and the second component 2, respectively, by means of a first mounting device 8 and a second mounting device 9, respectively.

In a preferred embodiment, shown in Figure 1, the first measuring unit 6 comprises a first light source 10, which is preferably a laser light source which is arranged to provide a first laser beam 11 directed towards the second measuring unit 7. For this reason, the second measuring unit 7 comprises a light detector 12 arranged to detect incident light from the first light source 10. Furthermore, the second measuring unit 7 may comprise a second laser light source for generating a further beam of laser light intended to be directed towards the first measuring unit 6, in particular towards a further light detector disposed in said first measuring unit 6 and arranged to detect possible incident light from the second the laser light source. However, said measuring units 6, 7 need not contain both light source and light detector. The advantage of two laser beams is more accurate measurements.

Figure 1 further shows a mobile display unit 13 according to the present invention. The display unit 13 is preferably connected to at least one measuring unit 6, 7 via a wireless connection 27 such as IEEE 802.11 type or Bluetooth. A wireless connection makes the display unit 13 easy to move around the arrangement 100. The connection can also be a physical connection, such as an EIA-485 coupling or an EIA-422 coupling to at least one measuring unit 6, 7.

The display unit 13 consists of an outer casing 14, and preferably has such size that a first user (not shown in the figure) of the display unit 13 can hold it in his hand. A mobile display unit 13 of such size allows it to be moved when the user moves around the arrangement 100 with the display unit 13 in his hand, alternatively hands over the display unit to a second user in a different position.

The display unit 13 has a display 15, such as an LCD screen with full VGA resolution. The display 15 displays graphic information 16 which symbolically represents the arrangement of the physical components 1, 2 relative to each other. The graphic information 16 is suitably in the form of three-dimensional views of the arrangement 100 with images of its main constituent parts, seen from a given viewing angle. The display 15 may also be configured to display numerical or other information regarding for example the dimensions of the components 1, 2, or other measurements which are relevant for the alignment of the components 1, 2 relative to each other.

Figure 2 shows a schematic image of the display unit 13. This includes a wireless or physical connection to at least one measuring unit 6, 7 that sends input data 20 to a control unit 21 regarding, for example, the measurements being taken to implement the alignment of the components 1 and 2 in question. The control unit 21 is also configured to receive data on the positions of the components 1, 2, data on the dimensions of the components 1, 2 and the shafts 3, 5, and other constituent components of the arrangement 100, as well as the relevant mutual spacing between different parts of the arrangement 100. The control unit 21 is a suitable processor. The display unit 13 also includes a memory 22. The memory 22 includes previously stored information, such as previously measured values from the measuring units 6, 7, or values entered by the user, which are sent to the control unit 21. Instructions 23 containing pre-programmed instruction information are also sent to the control unit 21. The instructions 23 state *i.a.* how alignment errors are to be calculated and which graphic information 16 is to be displayed. The control unit 21 thus indicates further graphic information 16 and the alignment values subsequently displayed on the display 15.

The control unit 21 also includes receipt of user information 24 via, e.g., a touch screen or a keyboard on the display unit 13. The user information 24 may be distances measured in other ways than via the measuring unit 6, 7, such as measured manually by the user. An example of these distances is the distance between said light source 10 and said light detector 12 of the measuring units 6, 7, or between front and rear support points 17 of a component 1, 2. These distances are stated by the user before the first calculation is performed by the control unit 33. The display unit 20 further includes a power source 41.

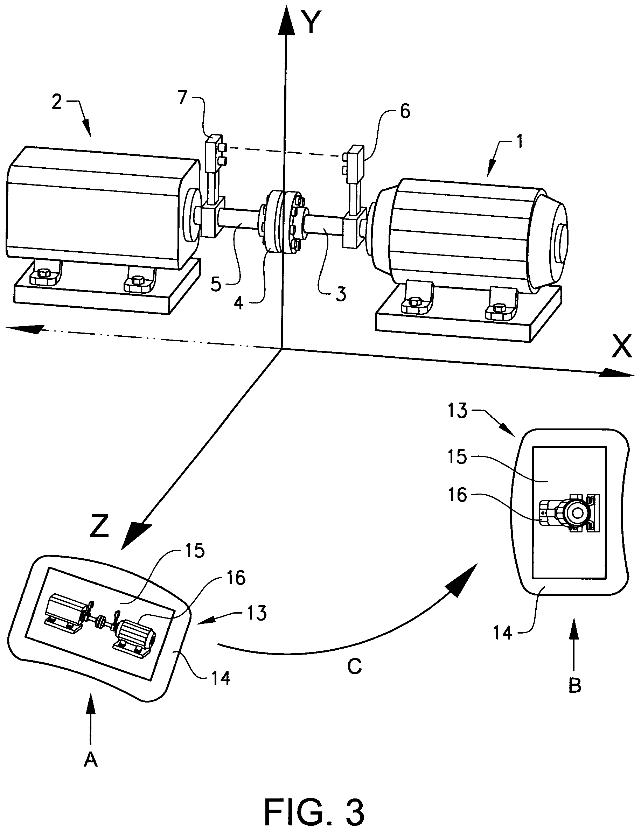

The control unit 21 also comprises a gyro unit 25, which measures the angular velocity and horizontal movement when the control unit 21 is moved by rotation. The gyro unit 25 also receives user information 24, for example an initial calibration. At the initial calibration, the starting positions of the gyro unit 25 and thus of the display unit 13 are entered in the co-ordinate system, *i.e.* a geometric position. The co-ordinate system is described in more detail below in connection with Figure 3.

The display unit 13 further includes a data output port 26 to enable the display unit to be connected to a computer system. The data output port 26 may be a wireless connection, such as of the type Bluetooth, or a physical connection, such as a USB port. Furthermore, the display unit 13 comprises a power source 27.

Figure 3 shows the arrangement of a first component 1 and a second component 2 in a co-ordinate system. Said coupling 4 between an output shaft 3 and an input shaft 5 represents the zero value on the x-axis and z-axis, respectively. The display unit 13 is mobile and can thus be moved in all directions. The gyro unit 25 may be configured to record the movements in the x-axis point and for rotation around the y-axis and sends these data to the control unit 21. The inventive concept in its basic form is, however, constituted such that only information on the rotation about the y-axis is recorded.

The gyro unit 25 is given a starting position from where it records movements. The starting position for the display unit 13 is set in relation to the arrangement 100. The user specifies more precisely via user information 24 to the control unit 21 when the display unit 13 is in the starting position, which, for example, could be when the longitudinal direction of the display unit 13 is parallel to the longitudinal direction of the arrangement 100, *i.e.* an imaginary direction along which the shafts 3, 5 are oriented.

The longitudinal direction of the arrangement 100 is illustrated in Figure 3 in a co-ordinate system in the form of the longitudinal direction of the x-axis. The longitudinal direction of the display unit 13 is thus parallel with the x-axis, which is the geometrical position data of the display unit. The starting position, in which the longitudinal direction of the display unit 13 is parallel to the x-axis, is shown as position A in Figure 3.

When the display unit 13 is in the starting position, the control unit 21 sends first graphic information 16 to the display 15 corresponding to the arrangement 100 in the xy-plane. This graphic information 16 is then suitably a three-dimensional image of the arrangement 100 from a view and with a perspective corresponding to how a user (who is holding the display unit 13 in front of him) actually sees the arrangement 100. This is shown schematically in Figure 3.

The control unit 21 sends the geometric position data of the starting position to the gyro unit 25. The gyro unit 25 detects a change in the geometric orientation of the display unit 13 corresponding to a rotation of the display unit 13 in the starting position (where the starting position per se of the display unit 13 is not changed, only its orientation). With reference to the co-ordinate system in Figure 3, only the rotation about the y-axis is recorded. This means that the display unit 13 has the same geometric position recorded by the gyro unit 25 whether the display unit 13 is coplanar with the xy-plane or the xz-plane.

A 90 degree rotation about the y-axis of the display unit 13 is illustrated with a rotational movement C in Figure 3. The longitudinal direction of the display unit 13 is thus perpendicular to the longitudinal direction of the x-axis after said rotation. This position is shown as B in Figure 3.

When the display unit 13 is in position B, the gyro unit 25 sends new geometric position and orientation data to the control unit 21 after movement about the y-axis. Thus, the control unit 21 adjusts the graphic information 16 shown on the display 15 to the new position B. This new graphic information 16, which corresponds to the new position B, is, as indicated schematically in Figure 3, a three-dimensional image of the arrangement 100 in a view corresponding to a user's viewing of the arrangement from an angle corresponding to the user holding the display unit 13 in front of him in this new position B.

Altogether, the graphic information 16 provided by the display unit 13 consists of a number of different three-dimensional views of generic arrangements 100 that are pre-programmed in the display unit 13 as memory 22. These three-dimensional views can represent the arrangement 100 viewed from 4 different angles, preferably at least 6 different angles, but preferably more, e.g. 8 or more different angles. In its simplest form, it may be sufficient with only two views; a front view of the arrangement 100 (*i.e*., corresponding to position A in Figure 3), and a view seen from the opposite side of the machine. However, as explained above, the invention is adapted such, if needed, as to provide the user with a more flexible display unit 13, which can display multiple sets of graphic information 16 in dependence on the orientation of the display unit 13.

The invention is based on the control unit 21 receiving geometric position and orientation values from the gyro unit 25. At pre-determined geometric values received from the gyro unit 25, the control unit 21 changes the graphic information 16 shown by the display unit 13. A number of different component arrangements can also be pre-programmed, where each component arrangement corresponds to a number of different three-dimensional views seen from different angles. The user can thus choose the component arrangement in the display unit 13 which best reflects the physical arrangement 100.

The invention is based on the orientation, preferably about the y-axis, of the display unit 13 being detected by the gyro unit 25. A change in the orientation of the display unit 13 does not necessarily correspond to a change in the position of the display unit 13. In other words, the presented graphic information 16 can be changed in dependence on a change in the orientation of the display unit 13, although its position remains the same. Conversely it applies that the position of the display unit 13, *e.g.* in the form of a movement of the display unit 13 along the z-axis (*i.e.* without it being rotated about the y-axis) can be changed without changing its orientation. In such a case, the graphics information 16 will not be changed because this situation corresponds to the user's viewing angle remaining the same during this movement of the position of the display unit 13 along the z-axis.

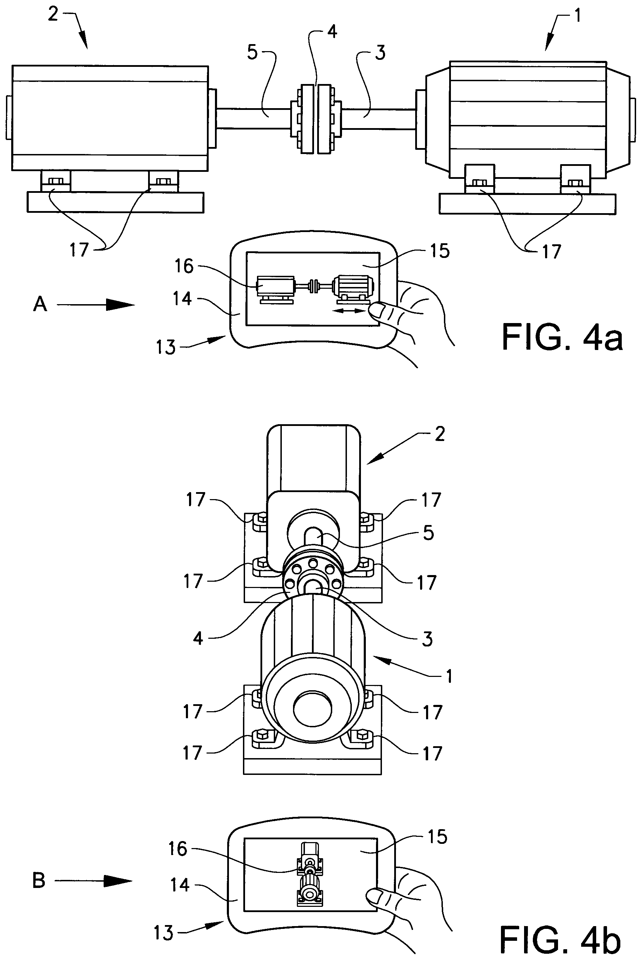

Figures 4a and 4b show position A and position B, respectively, of the display unit 13. In Figure 4a, the arrangement 100 is viewed perpendicularly to the longitudinal direction of the shafts, where the graphic information 16 of the display unit 13 reflects this view or viewing. Figure 4b shows how the display unit 13 is rotated about the y-axis in that the user holding the display unit in front of him has moved (or in any case so that the display unit 13 has moved) to a position perpendicular to the arrangement 100. The graphic information 16 displayed by the display unit 13 has thus been adapted to this new view. The new graphic information 16 then represents the arrangement 100 as seen from the user's perspective. This makes it easier for the user to recognize the arrangement 100, and thus also the different measurements and values that may need adjustment at the aligning.

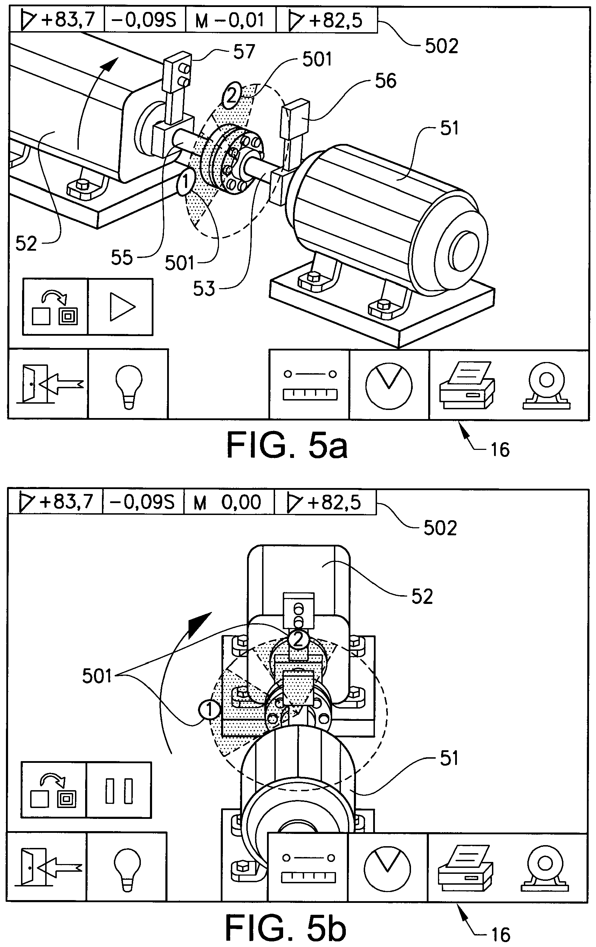

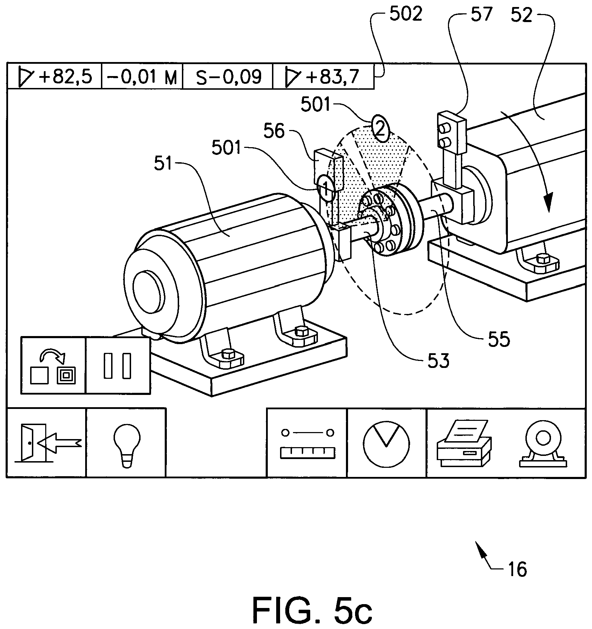

Figures 5a-5c show an embodiment of the graphic information 16 of the display unit 13. The graphic information 16 shown in Figure 5a corresponds to the graphic information 16 which a user sees when the user is standing obliquely from the side against the arrangement 100, that is between position A and position B in Figure 3, and holds the display unit 13 in front of him, *i.e.* with the longitudinal direction of the display unit towards him. Figure 5b corresponds to the graphic information 16 displayed by the display unit 13 when the user has moved to the short side of the arrangement 100 (and is still holding the display unit 13 in front of him), that is in position B in Figure 3. The graphic information 16 according to Figure 5b is also shown when only the orientation of the display unit 13 is changed according to rotational movement C in Figure 3, *i.e.* that the display unit is rotated, but the user remains standing still. This allows two users who are facing in different directions towards the arrangement 100 to swop the display unit 13 between them and to view the arrangement 100 accurately reflected in the display unit 13 from their separate positions. In Figure 5C, the user of the display unit 13 has moved to the other side of the arrangement 100 and is standing obliquely from the side towards the arrangement 100, that is corresponding to Figure 5a, but on the opposite side of component 1. Alternatively, a first user has given the display unit to a second user on the other side of the arrangement 100 (who is holding the display unit in front of him and is facing obliquely towards the arrangement). The position and orientation of the display unit 13 have thus changed. The graphic information 16 thus reflects the physical components 1, 2 as graphic components 51, 52 on the display 15 with respect to how the display unit 13 is oriented. Usually, the display unit 13 is oriented in a direction corresponding to the user's range of vision, *i.e.* that the user is holding the display unit 13 in front of him with its longitudinal direction towards him. However, the user may choose to rotate the display unit 13 to see the arrangement 100 from another view.

During measuring, the graphic information 16 shows the different measuring positions 501 allowed for measuring units 6, 7. The measuring units 6, 7 are represented graphically as measuring units 56, 57 on the display unit 13. The display unit 13 shows how the measuring units 56, 57 should be rotated about the shafts 53, 55 (corresponding to shafts 3, 5) for measurements to be made in different measuring positions so that angular errors and offset errors can be calculated. Since the measuring positions 501 are illustrated by the display unit 13 this makes it easier for the user during measuring. In Figures 5a-c, the values in two positions 501 have already been measured, and an arrow indicates how the measuring units 53, 55 should be rotated to reach a third position in which a third measuring is possible. This third position must be outside the angular regions "1" and "2" of the two previous measuring positions 501. Angular errors and offset errors are calculated by the control unit from the measured values in at least two, preferably three, measuring positions 501.

The graphic information 16 displayed on the display unit 13 in Figures 5a-c further includes raw data 502 from the measuring units 56, 57 including rotational angle and position where a laser beam hits the opposite measuring unit 56, 57. Furthermore, the graphic information 16 can indicate whether the measured values are within previously established threshold ranges of measuring, or not.

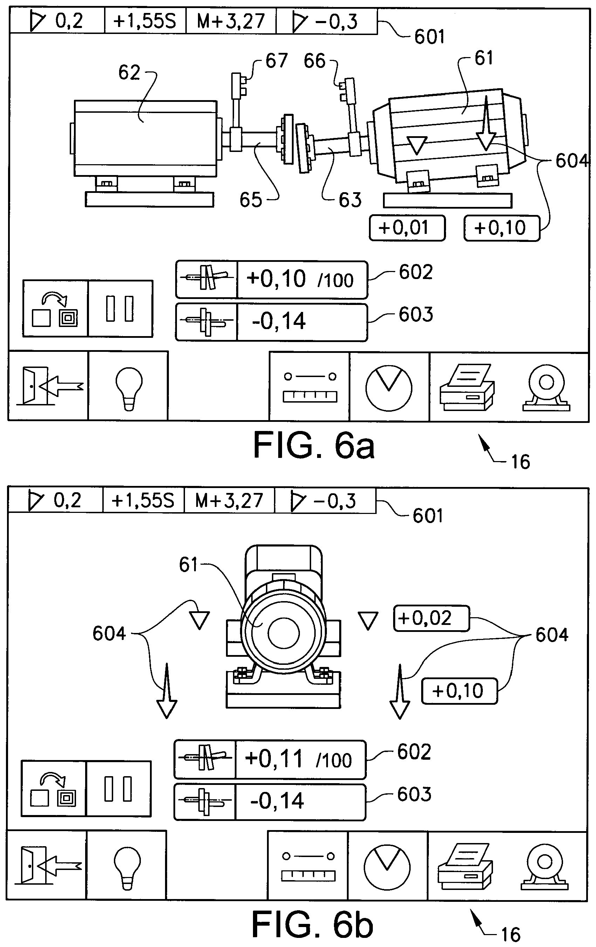

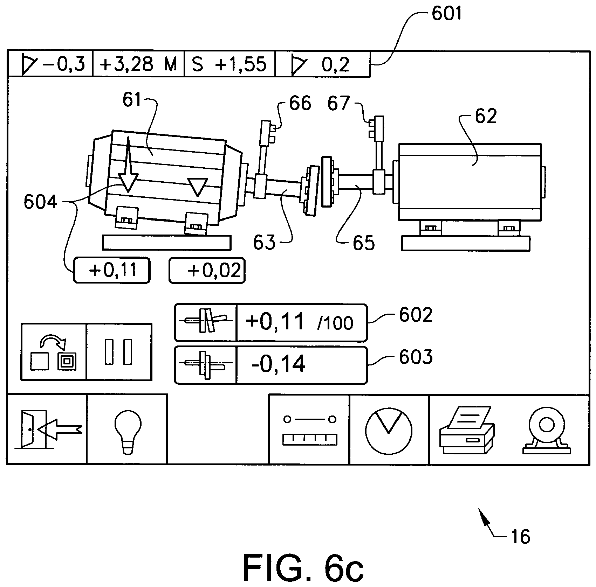

Figures 6a-6c show an embodiment of the graphic information 16 of the display unit 13 in the alignment of the physical components 1 and 2. The physical components 1, 2 correspond to the graphic components 51, 52. Figure 6a reflects what the user sees when he is in position A and is holding the display unit 13 oriented in front of him as shown in Figure 4a. Figure 6b reflects what the user sees when he has moved to position B (alternatively just rotates the display unit 90 degrees in the zx-plane so that its orientation is changed), and Figure 6c reflects what the user sees when he has moved to the other side of the arrangement 100 with the display unit 13 in front of him (alternatively has rotated the display unit 13 correspondingly so that its orientation in the zx-plane is changed without its position being changed). The graphic information 16 shown on the display unit 13 corresponds to what the user sees before him when he is holding the display unit 13 in front of him. The display unit 13 graphically represents the arrangement 100 from the geometric orientation data of the display unit 13. In Figure 4b, the display unit 13 is held such that its longitudinal direction is perpendicular to the longitudinal direction of the arrangement 100. In Figure 6c, the graphic information 16 thus includes the graphic components 51, 52, shown perpendicular to the longitudinal direction of the arrangement 100.

Figures 6a-6c show graphic information 16 including angular errors 602 and offset errors 603 on the display unit 13. Furthermore there are shown graphic components 61, 62 corresponding to the physical components 1, 2, and how they should be adjusted to align the shafts 63, 65. The adjustments 604 are shown by the display unit 13 with arrows and the value at the first component 61. As the graphic information 16 corresponds to what the user sees before him, it is therefore easy for the user to see how the adjustments 604 of the component 1, which corresponds to the component 61, should be implemented. According to the graphic information in Figure 6a, for example the rear part of component 1, shown on the display 15 as component 61, should be lowered. The mobile display unit 13 thus makes measuring and aligning of physical components easier for the user.

The graphic information 16 displayed on the display unit 13 in Figures 6a-c further includes raw data 601 from the measuring units 66, 67. The graphic information 16 includes other information which is not specifically described here.

It is apparent from the figures that the invention is particularly suited for use in the alignment of rotating machines because their shafts must be aligned. It is advantageous if a user can easily obtain graphic information about which component needs to be aligned, *i.e.* what adjustments should be made and where in the arrangement these adjustments should be made. Graphic representation from the user's perspective makes the alignment easier and therefore faster.

The invention is not limited to the above embodiments and examples, but is limited by the scope of the appended claims.

## Claims

1. A measuring system for measuring the relative positions of an arrangement (100) of a first physical component (1) comprising a rotating output shaft (3) and a second physical component (2) comprising a rotating input shaft (5), the measuring system comprising:
- a first measuring unit (6) and a second measuring unit (7) being mounted on each of said shafts (3, 5), wherein the first measuring unit (6) comprises a light source and said second measuring unit (7) comprises a detector for said light source; and
- a mobile display unit (13) comprising a control unit (21) which is adapted for transmitting information regarding at least the position of each of said components (1, 2);
- wherein the display unit (13) is connected to at least one of said measuring units (6, 7) and is adapted for displaying graphic information (16) representing said components (1, 2);
- the display unit (13) is connected to at least one measuring unit (6, 7) via a wireless connection for sending input data (20) from said measuring unit (6, 7) to said control unit (21),
**characterized in that** the display
unit (13) comprises a gyro unit (25) for registration of the orientation of the display unit (13) relative to said components (1, 2) by detecting changes in the orientation of the display unit (13) corresponding to rotation of the display unit (13) about a vertical axis, wherein said gyro unit (25) is connected to said control unit (21), wherein said graphic information (16) is constituted by a plurality of three-dimensional views representing said arrangement (100) and being pre-programmed in the display unit (13), and wherein the control unit (21) is adapted to adjust said display of said graphic information (16) in dependence on the orientation of the display unit (13).

2. Measuring system according to claim 1, wherein said graphic information (16) is views of the arrangement (100) of said physical components (1, 2) viewed from different viewing angles which depend on said orientation.

3. Measuring system according to any of the claims 1-2, wherein the gyro unit (25) receives an initial calibration value for the registration of the geometric position of the display unit (13) from the user via the control unit (21).

4. Measuring system according to any of the claims 1-3, wherein the control unit (21) includes Information regarding a plurality of arrangements of said graphic Information (16) to represent said arrangement of said components (1, 2) in dependence on the orientation of the display unit (13) relative to said arrangement (100).

5. Measuring system according to claim 4, wherein the control unit (21) at a predetermined value obtained from the gyro unit (25) changes the graphic information (16) regarding the arrangement (100) of said physical component displayed by the display unit (13).

6. Measuring system according to any one of claims 1-5, wherein said gyro unit (25) is a vibration gyro unit.

7. Measuring system according to any one of the preceding claims, wherein the measuring units (6, 7) are adapted to measure the relative position of said first component (1) in relation to said second component (2) during a pre-determined operation condition.

8. Measuring system according to any one of the preceding claims, wherein the control unit (21) calculates alignment errors after obtaining at least three relative positions from said measuring units (6, 7), and where the display unit (13) shows calculated alignment errors.

9. A method for measuring the relative positions of an arrangement (100) of a first physical component (1) comprising a rotating output shaft (3) and a second physical component (2) comprising a rotating input shaft (5), wherein said method comprises:
- measuring said positions by means of first measuring unit (6) and a second measuring unit (7) being mounted on each of said shafts (3, 5), wherein the first measuring unit (6) comprises a light source and said second measuring unit (7) comprises a detector for said light source; and
- transferring information related to at least the position of said components (1, 2) for display of graphic information representing said components (1, 2) by means of a mobile display unit (13) which is connected to at least one of the measuring units (6, 7);
- providing a connection of the display unit (13) to at least one measuring unit (6, 7) via a wireless connection for sending input data (20) from said measuring unit (6, 7) to said control unit (21)
**characterized in that** the method further comprises:
- registering the orientation of the display unit (13) relative to said components (100) by means of a gyro unit (25) which is adapted for detecting changes in the orientation of the display unit (13) corresponding to rotation of the display unit (13) about a vertical axis;
- providing said graphic information (16) in the form of a plurality of three-dimensional views representing said arrangement (100) and being pre-programmed in the display unit (13; and
- adapting the display of said graphic information (16) in dependence on said orientation of the display unit (13).

## Patentansprüche

1. Messsystem zum Messen der relativen Positionen einer Anordnung (100) aus einer ersten physikalischen Komponente (1), umfassend eine sich drehende Ausgangswelle (3), und einer zweiten physikalischen Komponente (2), umfassend eine sich drehende Eingangswelle (5), wobei das Messsystem umfasst:
- eine erste Messeinheit (6) und eine zweite Messeinheit (7), die an jeder der Wellen (3, 5) angebracht sind, wobei die erste Messeinheit (6) eine Lichtquelle umfasst und die zweite Messeinheit (7) einen Detektor für die Lichtquelle umfasst; und
- eine mobile Anzeigeeinheit (13), umfassend eine Steuereinheit (21), die zum Übertragen von Information betreffend zumindest die Position jeder der Komponenten (1, 2) ausgelegt ist;
- wobei die Anzeigeeinheit (13) mit mindestens einer der Messeinheiten (6, 7) verbunden ist und zum Anzeigen von grafischer Information (16) ausgelegt ist, die die Komponenten (1, 2) darstellt;
- wobei die Anzeigeeinheit (13) mit mindestens einer Messeinheit (6, 7) über eine drahtlose Verbindung zum Senden von Eingangsdaten (20) von der Messeinheit (6, 7) an die Steuereinheit (21) verbunden ist,
**dadurch gekennzeichnet, dass** die Anzeigeeinheit (13) eine Gyroeinheit (25) zur Registrierung der Orientierung der Anzeigeeinheit (13) relativ zu den Komponenten (1, 2) durch Erfassen von Änderungen der Orientierung der Anzeigeeinheit (13) entsprechend einer Drehung der Anzeigeeinheit (13) um eine vertikale Achse umfasst, wobei die Gyroeinheit (25) mit der Steuereinheit (21) verbunden ist, wobei die grafische Information (16) durch eine Mehrzahl von dreidimensionalen Ansichten gebildet ist, die die Anordnung (100) darstellen und in der Anzeigeeinheit (13) vorprogrammiert sind, und wobei die Steuereinheit (21) ausgelegt ist, die Anzeige der grafischen Information (16) in Abhängigkeit von der Orientierung der Anzeigeeinheit (13) anzupassen.

2. Messsystem nach Anspruch 1, wobei es sich bei der grafischen Information (16) um Ansichten der Anordnung (100) der physikalischen Komponenten (1, 2) handelt, betrachtet aus unterschiedlichen Betrachtungswinkeln, welche von der Orientierung abhängen.

3. Messsystem nach einem der Ansprüche 1 bis 2, wobei die Gyroeinheit (25) von dem Benutzer über die Steuereinheit (21) einen Ausgangskalibrierwert für die Registrierung der geometrischen Position der Anzeigeeinheit (13) empfängt.

4. Messsystem nach einem der Ansprüche 1 bis 3, wobei die Steuereinheit (21) Information betreffend eine Mehrzahl von Anordnungen der grafischen Information (16) beinhaltet, um die Anordnung der Komponenten (1, 2) in Abhängigkeit von der Orientierung der Anzeigeeinheit (13) relativ zu der Anordnung (100) darzustellen.

5. Messsystem nach Anspruch 4, wobei die Steuereinheit (21) bei einem vorbestimmten Wert, der von der Gyroeinheit (25) erhalten wird, die grafische Information (16) betreffend die Anordnung (100) der physikalischen Komponente ändert, die von der Anzeigeeinheit (13) angezeigt wird.

6. Messsystem nach einem der Ansprüche 1 bis 5, wobei die Gyroeinheit (25) eine Vibrationsgyroeinheit ist.

7. Messsystem nach einem der vorhergehenden Ansprüche, wobei die Messeinheiten (6, 7) ausgelegt sind, die relative Position der ersten Komponente (1) in Bezug auf die zweite Komponente (2) während eines vorbestimmten Betriebszustands zu messen.

8. Messsystem nach einem der vorhergehenden Ansprüche, wobei die Steuereinheit (21) Ausrichtungsfehler nach Erhalten von mindestens drei relativen Positionen von den Messeinheiten (6,7) berechnet und wobei die Anzeigeeinheit (13) die berechneten Ausrichtungsfehler zeigt.

9. Verfahren zum Messen der relativen Positionen einer Anordnung (100) aus einer ersten physikalischen Komponente (1), umfassend eine sich drehende Ausgangswelle (3), und einer zweiten physikalischen Komponente (2), umfassend eine sich drehende Eingangswelle (5), wobei das Verfahren umfasst:
- Messen der Positionen mittels einer ersten Messeinheit (6) und einer zweiten Messeinheit (7), die an jeder der Wellen (3, 5) angebracht sind, wobei die erste Messeinheit (6) eine Lichtquelle umfasst und die zweite Messeinheit (7) einen Detektor für die Lichtquelle umfasst; und
- Übertragen von Information, die sich auf zumindest die Position der Komponenten (1, 2) bezieht, zur Anzeige von grafischer Information (16), die die Komponenten (1, 2) darstellt, mittels einer mobilen Anzeigeeinheit (13), die mit mindestens einer der Messeinheiten (6, 7) verbunden ist;
- Bereitstellen einer Verbindung der Anzeigeeinheit (13) mit mindestens einer Messeinheit (6, 7) über eine drahtlose Verbindung zum Senden von Eingangsdaten (20) von der Messeinheit (6, 7) an die Steuereinheit (21);
**dadurch gekennzeichnet, dass** das Verfahren ferner umfasst:
- Registrieren der Orientierung der Anzeigeeinheit (13) relativ zu den Komponenten (100) mittels einer Gyroeinheit (25), die zum Erfassen von Änderungen der Orientierung der Anzeigeeinheit (13) entsprechend einer Drehung der Anzeigeeinheit (13) um eine vertikale Achse ausgelegt ist;
- Bereitstellen der grafischen Information (16) in der Form einer Mehrzahl von dreidimensionalen Ansichten, die die Anordnung (100) darstellen und in der Anzeigeeinheit (13) vorprogrammiert sind; und
- Anpassen der Anzeige der grafischen Information (16) in Abhängigkeit von der Orientierung der Anzeigeeinheit (13).

## Revendications

1. Système de mesure pour la mesure des positions relatives d'un agencement (100) d'un premier composant physique (1) comprenant un arbre de sortie rotatif (3) et d'un second composant physique (2) comprenant un arbre d'entrée rotatif (5), le système de mesure comprenant :
- une première unité de mesure (6) et une seconde unité de mesure (7), respectivement montées sur lesdits arbres (3, 5), ladite première unité de mesure (6) comprenant une source de lumière et ladite seconde unité de mesure (7) comprenant un détecteur pour ladite source de lumière ; et
- un dispositif d'affichage mobile (13) comprenant une unité de commande (21) qui est conçue pour transmettre des informations concernant au moins la position de chacun desdits composants (1, 2),
- l'unité d'affichage (13) étant connectée à au moins l'une desdites unités de mesure (6, 7) et étant conçue pour afficher des informations graphiques (16) représentant lesdits composants (1, 2) ;
- l'unité d'affichage (13) étant connectée à au moins une unité de mesure (6, 7) par une connexion sans fil, pour envoyer des données d'entrée (20), provenant de ladite unité de mesure (6, 7), à ladite unité de commande (21),
**caractérisé en ce que** l'unité d'affichage (13) comprend une centrale gyroscopique (25) pour enregistrer l'orientation de l'unité d'affichage (13) par rapport auxdits composants (1, 2) par détection des changements d'orientation de l'unité d'affichage (13) correspondant à la rotation de l'unité d'affichage (13) autour d'un axe vertical, ladite centrale gyroscopique (25) étant connectée à ladite unité de commande (21), lesdites informations graphiques (16) étant constituées d'une pluralité de vues tridimensionnelles représentant ledit agencement (100) et étant préprogrammées dans l'unité d'affichage (13), et l'unité de commande (21) étant conçue pour ajuster ledit affichage desdites informations graphiques (16) en fonction de l'orientation de l'unité d'affichage (13).

2. Système de mesure selon la revendication 1, dans lequel lesdites informations graphiques (16) sont des vues de l'agencement (100) desdits composants physiques (1, 2), selon des angles de vision différents qui dépendent de ladite orientation.

3. Système de mesure selon l'une quelconque des revendications 1 et 2, dans lequel la centrale gyroscopique (25) reçoit de l'utilisateur, par l'intermédiaire de l'unité de commande (21), une valeur initiale d'étalonnage pour l'enregistrement de la position géométrique de l'unité d'affichage (13).

4. Système de mesure selon l'une quelconque des revendications 1 à 3, dans lequel l'unité de commande (21) comprend des informations concernant une pluralité d'agencements desdites informations graphiques (16), pour représenter ledit agencement desdits composants (1, 2) en fonction de l'orientation de l'unité d'affichage (13) par rapport audit agencement (100).

5. Système de mesure selon la revendication 4, dans lequel l'unité de commande (21), pour une valeur prédéterminée obtenue de la centrale gyroscopique (25), change les informations graphiques (16) affichées par l'unité d'affichage (13) concernant l'agencement (100) dudit composant physique.

6. Système de mesure selon l'une quelconque des revendications 1 à 5, dans lequel ladite centrale gyroscopique (25) est une centrale gyroscopique à vibration.

7. Système de mesure selon l'une quelconque des revendications précédentes, dans lequel les unités de mesure (6, 7) sont conçues pour mesurer la position relative dudit premier composant (1) par rapport audit second composant (2) au cours d'une condition de fonctionnement prédéterminée.

8. Système de mesure selon l'une quelconque des revendications précédentes, dans lequel l'unité de commande (21) calcule les erreurs d'alignement après avoir obtenu au moins trois positions relatives provenant desdites unités de mesure (6, 7), l'unité d'affichage (13) présentant les erreurs d'alignement calculées.

9. Procédé de mesure des positions relatives d'un agencement (100) d'un premier composant physique (1) comprenant un arbre de sortie rotatif (3) et d'un second composant physique (2) comprenant un arbre d'entrée rotatif (5), ledit procédé comprenant :
- la mesure desdites positions au moyen d'une première unité de mesure (6) et d'une seconde unité de mesure (7) respectivement montées sur lesdits arbres (3, 5), ladite première unité de mesure (6) comprenant une source de lumière et ladite seconde unité de mesure (7) comprenant un détecteur pour ladite source de lumière ; et
- le transfert des informations concernant au moins la position desdits composants (1, 2) pour affichage des informations graphiques représentant lesdits composants (1, 2) au moyen d'une unité d'affichage mobile (13) qui est connectée à au moins l'une des unités de mesure (6, 7), et
- la réalisation d'une connexion de l'unité d'affichage (13) à au moins une unité de mesure (6, 7) par l'intermédiaire d'une connexion sans fil pour envoyer des données d'entrée (20) provenant de ladite unité de mesure (6, 7) à ladite unité de commande (21) ;
**caractérisé en ce qu'**il comprend en outre :
- l'enregistrement de l'orientation de l'unité d'affichage (13) par rapport auxdits composants (100) au moyen d'une centrale gyroscopique (25) qui est conçue pour détecter des changements d'orientation de l'unité d'affichage (13) correspondant à la rotation de l'unité d'affichage autour d'un axe vertical,
- la fourniture desdites informations graphiques (16) sous la forme d'une pluralité de vues tridimensionnelles représentant ledit arrangement (100), et préprogrammées dans l'unité d'affichage (13), et
- l'adaptation de l'affichage desdites informations graphiques (16) en fonction de ladite orientation de l'unité d'affichage (13).
